(19) Europäisches Patentamt
European Patent Office
Office européen des brevets

(11) **EP 3 757 623 B1**

(12) **EUROPÄISCHE PATENTSCHRIFT**

(45) Veröffentlichungstag und Bekanntmachung des Hinweises auf die Patenterteilung:
**18.06.2025 Patentblatt 2025/25**

(21) Anmeldenummer: **19182492.9**

(22) Anmeldetag: **26.06.2019**

(51) Internationale Patentklassifikation (IPC):
**G01T 1/167** *(2006.01)* **G01F 23/288** *(2006.01)*

(52) Gemeinsame Patentklassifikation (CPC):
**G01F 23/288; G01T 1/169;** G01F 23/804

(54) **VERFAHREN ZUR LOKALISIERUNG VON BEREICHEN ERHÖHTER RADIOAKTIVITÄT IN EINEM MESSGUT**

METHOD FOR LOCALIZATION OF AREAS OF INCREASED RADIOACTIVITY IN AN OBJECT

PROCÉDÉ DE LOCALISATION DES ZONES DE RADIOACTIVITÉ ÉLEVÉE DANS UN PRODUIT À MESURER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.12.2020 Patentblatt 2020/53**

(73) Patentinhaber: **Safetec GmbH**
**69123 Heidelberg (DE)**

(72) Erfinder: **Thomas, Tim**
**68723 Schwetzingen (DE)**

(74) Vertreter: **Bals & Vogel Patentanwälte PartGmbB**
**Konrad-Zuse-Str. 4**
**44801 Bochum (DE)**

(56) Entgegenhaltungen:
WO-A2-2007/075181    JP-A- 2004 245 649
JP-A- S60 111 981    US-A1- 2006 011 849
US-A1- 2014 019 094

## Beschreibung

Gegenstand der vorliegenden Erfindung ist ein Verfahren zur Lokalisierung von Bereichen erhöhter Radioaktivität innerhalb eines Messgutes unter Verwendung einer Messkammer, die von einer Mehrzahl von Detektoren zur Erfassung radioaktiver Strahlung umgeben ist.

Beim Rückbau von potenziell strahlenbelasteten Anlagen wie beispielsweise stillgelegten Kernkraftwerken fallen große Mengen von Rückbaumaterial an, welches vor der Entsorgung oder Wiederverwendung auf seine Strahlenbelastung hin untersucht werden muss. Dazu wird das zu untersuchende Material (nachfolgend auch als Messgut bezeichnet) in ein Messsystem der oben genannten Art eingeführt und eine Aktivität des Messgutes bestimmt. Nur wenn bestimmte Grenzwerte hinsichtlich der Aktivität des Messgutes nicht überschritten werden, kann das untersuchte Messgut im strahlenschutzrechtlichen Sinne freigegeben werden. Die eingangs genannte von Detektoren umgebene Messkammer wird daher auch als Freimessanlage bezeichnet.

In der Praxis wird das zu untersuchende Rückbaumaterial häufig nach Materialarten sortiert und in ein Gebinde, beispielsweise in eine Gitterbox, gefüllt. Dass gefüllte Gebinde kann dann in die Freimessanlage eingebracht und darin vermessen werden.

Im Stand der Technik besteht oftmals das Problem, dass bei Feststellung einer gewissen Aktivität im Messgut zunächst unbekannt ist, ob diese Aktivität gleichmäßig über das Messgut verteilt ist, oder ob es innerhalb des Messgutes Bereiche erhöhter Aktivität, sogenannte Hotspots, gibt. Es war daher in solchen Fällen regelmäßig erforderlich, weitere Untersuchungen durchzuführen, um die Hotspots, sofern vorhanden, zu lokalisieren. Diese weiteren Untersuchungen sind aufwendig, da sie die Verwendung von weiteren Messeinrichtungen mit größerem lokalem Auflösungsvermögen erfordern.

Ausgehend von diesem Stand der Technik ist es die Aufgabe der vorliegenden Erfindung ein Verfahren bereitzustellen, welches eine einfachere und wirtschaftlichere Lokalisierung von Bereichen erhöhter Radioaktivität innerhalb eines Messgutes ermöglicht.

Gelöst wird diese Aufgabe mit den Merkmalen der unabhängigen Ansprüche. Vorteilhafte Ausführungsformen sind in den abhängigen Ansprüchen angegeben.

Zunächst werden einige im Rahmen der Erfindung verwendete Begriffe erläutert. Ein Messgut kann im Rahmen der Erfindung insbesondere aus Rückbaumaterial zusammengestellt werden, welches bei Rückbau einer kerntechnischen Anlage angefallen ist. Vorzugsweise wird das Rückbaumaterial sortiert, so dass das Messgut im Wesentlichen aus einem einzelnen Material besteht. Im Rahmen des Verfahrens wird das Material des Messgutes ermittelt. Bei dieser Materialermittlung ist es nicht erforderlich, dass alle im Messgut vorhandenen Materialien mit hoher Genauigkeit bestimmt werden.

Vielmehr genügt es, wenn bis zu einem gewissen Grad bekannt ist, aus welchen Materialien das Messgut besteht. Die Genauigkeit der Materialermittlung bezogen auf die Masse liegt bei mehr als 85 %, vorzugsweise bei mehr als 95 %.

Eine ungenaue Materialermittlung kann beispielsweise vorliegen, wenn bei der Ermittlung angenommen wird, dass das Messgut 100 Gew.-% Eisen aufweist, das Messgut aber tatsächlich aus 80 Gew.-% Eisen und 20 Gew.-% Kupfer besteht. Zwar können solche Ungenauigkeiten im Rahmen der Erfindung als systematische Unsicherheiten berücksichtigt werden, es hat sich allerdings gezeigt, dass bei zu großen Ungenauigkeiten die Lokalisation von Hotspots deutlich erschwert wird. Das Messgut wird in die Messkammer eingebracht. Das Messgut kann dazu beispielsweise in ein Gebinde (z.B. eine Gitterbox) eingefüllt und anschließend in dem Gebinde in der Messkammer abgestellt werden.

Die Messkammer ist von einer Mehrzahl von Detektoren umgeben. Dem Begriff Detektor wird vorliegend der Index i zugeordnet.

Mit dem Index werden die vorhandenen Detektoren nummeriert. Der Index i kann somit ganze Zahlen annehmen, welche zwischen 1 und der vorhandenen Anzahl der Detektoren liegt.

Im Rahmen des Verfahrens wird zur Simulation der Zählrate $ZSIM\_i,j$ angenommen, dass an zumindest einer Koordinate des Messgutes ein Punktstrahler angeordnet ist. Dem Begriff Koordinate wird dabei der Index j zugeordnet. Der Index j nummeriert die bei der Simulation angenommenen Koordinaten und kann somit ganze Zahlen annehmen, welche zwischen 1 und der Anzahl der angenommenen Koordinaten liegt.

Die Zählrate $Z\_i$ ist die vom Detektor i in Schritt d. gemessene Zählrate. Die Zählrate $ZSIM\_i,j$ ist die für den Detektor i simulierte Zählrate, welche von dem bei Koordinate j angenommenen Punktstrahler der Aktivität $A\_j$ verursacht wird. So wird beispielsweise die für den Detektor "3" simulierte Zählrate, welche von einer bei Koordinate "1" angeordneten Punktquelle der Aktivität $A_1$ verursacht wird, als Zählrate $ZSIM_{3,1}$ bezeichnet.

Durch das erfindungsgemäße Verfahren ist es möglich, einen innerhalb des Messgutes angeordneten Bereich zu lokalisieren, welcher eine erhöhte Aktivität aufweist, ohne dass dazu aufwändige zusätzliche Messungen notwendig sind. Vielmehr kann eine gewöhnliche Messung in der mit Detektoren umgebenen Messkammer verwendet werden, um einen Bereich erhöhter Aktivität ausfindig zu machen. Dazu wird die Aktivität sowie die Koordinate (also der angenommene Ort) des Punktstrahlers so verändert, dass die simulierte Zählrate an die gemessene Zählrate angepasst wird. Dem liegt die Kernidee zugrunde, dass ein "Hotspot" im Messgut in Abhängigkeit davon, an welcher Position des Messgutes er sich befindet, zu einer für diese Position charakteristischen Zählrate der Detektoren führt. Insbesondere wird die Zählrate eines Detektors umso höher sein, je näher er sich am Hotspot befindet und je weniger abschirmendes Messgutmaterial zwischen ihm und dem Hotspot angeordnet ist. Da erfindungsgemäß neben der Koordinate und der Aktivität auch das Material sowie die Dichte des Messgutes berücksichtig werden, kann durch Veränderung der Koordinate sowie der Aktivität des angenommenen Punktstrahlers ein Optimum erreicht werden, an dem die simulierte Zählrate möglichst genau mit der tatsächlich gemessenen Zählrate übereinstimmt.

Grundsätzlich ist es möglich, dass bereits ein einzelner angenommener Punktstrahler ausreichend ist (in diesem Fall ist also j = 1), um die gemessene Zählrate hinreichend genau an die simulierte Zählrate anzupassen. Es kann dann gefolgert werden, dass sich bei der angenommenen Koordinate j = 1 ein im wesentlichen punktförmiger Bereich befindet, welcher die bei der Simulation angenommene Aktivität $A_1$ aufweist. Regelmäßig wird allerdings ein zufällig zusammengesetztes Messgut eine Mehrzahl von Hotspots oder auch Hotspots mit einer größeren Ausdehnung aufweisen. In diesem Fall kann vorgesehen sein, dass der Schritt **e.** für zumindest einen weiteren Punktstrahler oder auch für eine Mehrzahl von Punktstrahlern wiederholt wird, wobei in Schritt f. die von verschiedenen Punktstrahlern stammenden simulierten Zählraten bei der Anpassung berücksichtigt werden. Beispielsweise kann dabei vorgesehen sein, dass die für die Mehrzahl von Punktstrahlern erhaltenen simulierten Zählraten ZSIM_i,j für jeden Detektor summiert werden und in Schritt f. die für jeden Detektor i erhaltene Summe der simulierten Zählraten an die jeweils vom Detektor i gemessenen Zählraten Z_i angepasst wird, indem die Mehrzahl der angenommenen Aktivitäten A_j und/oder die Mehrzahl der angenommenen Koordinaten j verändert werden. Das erfindungsgemäße Verfahren ermöglicht es so auf einfache Weise, mehrere Bereiche erhöhter Aktivität oder auch ausgedehnte Bereiche erhöhter Aktivität zu lokalisieren.

Auch wenn bereits ein einzelner angenommener Prüfstrahler ausreichend ist, um die gemessene Zählrate hinreichend genau an die simulierte Zählrate anzupassen, kann dennoch vorgesehen sein, dass weitere Prüfstrahler wie vorstehend beschrieben zur Simulation und Anpassung gemäß der Schritte e. und f. hinzugenommen werden, um die statistische Genauigkeit der ermittelten Aktivitätsverteilung zu verbessern.

In einer bevorzugten Ausführungsform wird für jeden Detektor i sowie für jede Koordinate j ein vorgegebener Wirkungsgrad W_i,j verwendet, um die Simulation gemäß Schritt e. durchzuführen. Der Wirkungsgrad W_i,j des Detektors i beschreibt das Verhältnis zwischen den ausgehend von der Koordinate j in das Detektorvolumen des Detektors i emittierten Teilchen zu den vom Detektor i tatsächlich gezählten Teilchen. Die Bestimmung eines solchen Wirkungsgrades ist notwendig, da üblicherweise ein bestimmter Anteil der ins Detektorvolumen emittierten Teilchen im Detektor keinen Zählimpuls auslösen, beispielsweise weil ein durch das Teilchen im Detektor ausgelöster elektrischer Puls eine erforderliche Schwelle nicht überschreitet. Durch den Wirkungsgrad wird dies berücksichtigt, so dass aus der vom Detektor gemessenen Zählrate auf die tatsächliche Aktivität geschlossen werden kann.

Von Vorteil ist es, wenn die vorgegebenen Wirkungsgrade W_i,j eine hohe Genauigkeit aufweisen. Die Genauigkeit der Wirkungsgrade wird vorliegend durch einen Versuchsaufbau definiert, bei dem ein Fass mit einem Volumen von 200 Litern zu 3/4 mit Wasser (Dichte 1g/cm3) gefüllt ist, wobei eine Co-60 Punktquelle mit einer Mindestaktivität von 25000 Bq (z.B. an einem Faden aufgehängt) exakt in der Mitte des Wasservolumens platziert wird. Die Genauigkeit der Wirkungsgrade ist bei diesem Versuchsaufbau vorzugsweise so hoch, dass eine 3 cm betragende Abweichung der Position des Punktstrahlers von der Mitte statistisch signifikant feststellbar ist. Weiter vorzugsweise ist die Genauigkeit der Wirkungsgrade so hoch, dass eine Abweichung der Positionierung des Punktstrahlers von 1 cm von der Mitte statistisch signifikant feststellbar ist. Im Rahmen des vorgenannten Versuchsaufbaus gilt weiterhin, dass die Unsicherheit der Wirkungsgrade vorzugsweise weniger als 15%, weiter vorzugsweise weniger als 10% beträgt. Die Unsicherheit der Wirkungsgrade ist vorliegend definiert als die Abweichung zwischen der für einen Detektor i simulierten Zählrate und der tatsächlichen vom Detektor i gemessenen Zählrate. Die bei der Lokalisierung der Hotspots erzielbare Genauigkeit kann dadurch deutlich erhöht werden.

In einer vorteilhaften Ausführungsform weisen die Detektoren Detektorflächen auf, welche die Messkammer im Wesentlichen unterbrechungsfrei umgeben. Vorzugsweise weist die Messkammer einen Gesamtwirkungsgrad von mehr als 40% auf, wenn in der Mitte der ansonsten leeren Messkammer ein Co-60 Punktstrahler platziert wird. Ein Gesamtwirkungsgrad von mehr als 40% liegt dann vor, wenn mindestens 40% der tatsächlich emittierten Teilchen von der Gesamtheit aller Detektoren erfasst werden. Dadurch kann sichergestellt werden, dass nahezu alle aus dem Messgut austretenden Teilchen durch eine Detektorfläche hindurchtreten, was für die gewünschte Genauigkeit bei der Lokalisierung der Hotspots ebenfalls förderlich ist.

Vorzugsweise handelt es sich bei den Detektoren um Szintilationszähler und weiter vorzugsweise um Plastikszintilationszähler. Die Anzahl der Detektoren ist größer als 12, bevorzugt größer als 16, und weiter bevorzugt größer als 20. Bei dieser Anzahl von Detektoren kann eine gute Ortsauflösung der detektierten Teilchen erzielt werden, was die Genauigkeit der Lokalisierung von Hotspots weiter erhöht. Zur Verbesserung der Messgenauigkeit einer Freimessanlage ist es grundsätzlich bekannt, die Anzahl der Detektoren zu erhöhen und das Detektorvolumen entsprechend zu verringern. Die örtliche Sensitivität der Freimessanlage nimmt dadurch zu. Allerdings hat sich im Rahmen der Erfindung wie nachfolgend erläutert gezeigt, dass eine Verringerung des Detektorvolumens nicht erforderlich ist, um eine hohe Lokalisierungsgüte zu erreichen.

Beim Rückbau von Kernkraftwerken fallen freizugebende Materialmengen in industriellen Maßstäben (> 10000 t) an. Aus wirtschaftlichen Gründen kann daher nicht durchgängig sichergestellt werden, dass das freizumessende Material vor dem Einbringen in eine Freimessanlage eine homogene Dichte aufweist. Da auch die Bestimmung der Dichte aus wirtschaftlichen Gründen nicht in jedem Einzelfall möglich ist, wird in der durch die vorliegende Erfindung vorgenommenen Simulation zur Vereinfachung von einer mittleren (also homogenen) Dichte ausgegangen. Es hat sich nun gezeigt, dass aufgrund dieser Gegebenheiten eine Verkleinerung der Detektorvolumen im Rahmen der vorliegenden Erfindung keine Verbesserung der Lokalisierungsgüte erzeugt. Die Detektoren weisen daher in einer bevorzugten Ausführungsform ein Detektorvolumen von mehr als 1000 cm$^3$ auf, vorzugsweise mehr als 1500 cm$^3$, weiter vorzugsweise mehr als 2000 cm$^3$. Zudem weisen die Detektoren Detektorflächen auf, welche vorzugsweise größer sind als 300 cm$^2$, weiter vorzugsweise größer als 400 cm$^2$. Durch Detektoren dieser Größe können auf besonders wirtschaftliche Weise große Materialmengen untersucht werden, wobei gleichzeitig durch das erfindungsgemäße Verfahren trotz der Detektorgröße eine hohe Lokalisierungsgüte erzielt werden kann.

Die gemessenen Zählraten sind davon abhängig, wie hoch ein Füllungsgrad des Messgutes ist. Der Füllungsgrad bezeichnet den Anteil des vom Messgut ausgefüllten Volumens relativ zu dem Volumen einer Einhüllenden des Messgutes. Wenn das Messgut in einem Gebinde (z.B. einer Gitterbox, einer Blechkiste oder einem Fass) bereitgestellt ist, bildet üblicherweise eine Innenfläche des Gebindes die Einhüllende des Messgutes. Eine bevorzugte Anwendung der Erfindung ist die Lokalisierung von Bereichen erhöhter Aktivität in Metallen, die in einer Gitterbox bereitgestellt werden. Bei einer durchschnittlichen Dichte von beispielsweise 2 g/cm3 liegt ein bevorzugter Füllungsgrad bei 50 %. Ist die Dichte geringer, so können auch höhere Füllungsgrade verwendet werden. Vorzugsweise wird ein Füllungsgrad des Messgutes ermittelt, wobei der Füllungsgrad in Schritt e. zur Simulation der Zählrate ZSIM_i,j verwendet wird. Der ermittelte Füllungsgrad ist weiter vorzugsweise nicht größer und maximal 25% kleiner als ein tatsächlicher Füllungsgrad des Messgutes.

Da Metalle eine geringe natürliche Aktivität aufweisen, liefert das erfindungsgemäße Verfahren besonders genaue Ergebnisse, wenn das Messgut einen hohen Metallanteil aufweist. Die geringe natürliche Aktivität führt zu einem geringen Strahlungsuntergrund, so dass sich Bereiche erhöhter Aktivität deutlicher vom Untergrund abheben. Von Vorteil ist daher wenn der Metallanteil größer ist als 90%, vorzugsweise größer als 95%, weiter vorzugsweise größer als 99%.

Bei der Simulation gemäß Schritt e. wird in einer bevorzugten Ausführungsform angenommen, dass der Punktstrahler durch das Isotop Co-60 gebildet ist. Die Energie der von Co-60 emittierten Teilchen ist relativ hoch im Vergleich zu den Teilchenenergien anderer Radionuklide, welche beim Rückbau von kerntechnischen Anlagen üblicherweise vorkommen. Je höher die Teilchenenergien sind, desto wahrscheinlicher können die Teilchen das Material durchdringen und auf die Detektoren treffen. Dort deponieren sie mit höherer Wahrscheinlichkeit eine größere Energie. Wenn das Messgut tatsächlich Teilchen mit niedrigerer Energie (z.B. Cs-137) emittiert, führt die Annahme des Punktstrahlers Co-60 für die Zwecke der Simulation dazu, dass die Lokalisation eines Hotspots als "konservativ" angesehen werden kann. In diesem Fall bedeutet "konservativ", dass durch die im Rahmen des Verfahrens erfolgende Berechnung der Aktivität die tatsächliche Aktivität im Messgut überschätzt wird.

Die erfindungsgemäße Vorrichtung kann durch die vorstehend bereits in Zusammenhang mit dem erfindungsgemäßen Verfahren erläuterten Merkmale fortgebildet werden.

Nachfolgend wird eine bevorzugte Ausführungsform der Erfindung unter Verweis auf die beigefügten Zeichnungen beispielhaft erläutert. Es zeigen:

Figur 1: eine dreidimensionale Ansicht einer Freimessanlage, welche zur Durchführung des Erfindungsgemäßen Verfahrens verwendet werden kann;

Figur 2: eine schematische Darstellung einer erfindungsgemäßen Vorrichtung zur Lokalisierung von Bereichen erhöhter Radioaktivität innerhalb eines Messgutes;

Figur 3: ein beispielhaftes Lokalisierungsergebnis des erfindungsgemäßen Verfahrens;

Figur 4: ein weiteres beispielhaftes Lokalisierungsergebnis des erfindungsgemäßen Verfahrens.

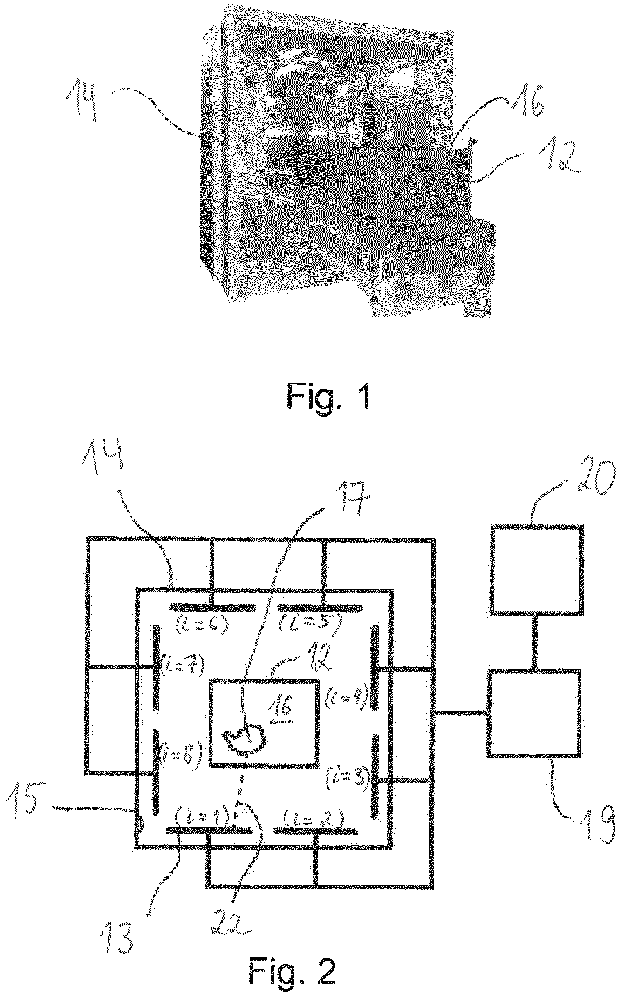

Figur 1 zeigt eine dreidimensionale Ansicht einer Vorrichtung zur Lokalisierung von Bereichen erhöhter Radioaktivität innerhalb eines Messgutes 16 mit einer Messkammer 14, welche von einer Mehrzahl von Detektoren 13 zur Erfassung radioaktiver Strahlung umgeben ist. Die Messkammer 14 kann zur Durchführung des erfindungsgemäßen Verfahrens verwendet werden. Vor der Messkammer 14 ist eine Gitterbox 12 angeordnet, welche mit einem zu vermessenden Messgut 16 befüllt ist. Bei dem Messgut 16 handelt es sich vorliegend um eine Mehrzahl von Metallscheiben, welche aus einem stillgelegten Kernkraftwerk stammen und welche mit radioaktivem Material verunreinigt sind. Die Gitterbox 12 ist zu 76 % mit den Metallscheiben gefüllt.

Über eine Rollenbahn kann die Gitterbox 12 in die Messkammer 14 eingeführt werden. An den Wänden der Messkammer sind 32 großflächige Detektoren angeordnet (in Figur 1 nicht zu sehen), welche die Messkammer 14 nahezu unterbrechungsfrei umgeben. Der Abdeckungsgrad der Detektoren liegt bei 98 %. Die von dem Messgut 16 emittierten radioaktiven Teilchen treffen daher mit hoher Wahrscheinlichkeit auf einen der Detektoren 13.

Figur 2 zeigt eine schematische Darstellung der erfindungsgemäßen Vorrichtung zur Lokalisierung von Bereichen erhöhter Radioaktivität innerhalb des Messgutes 16. In dieser vereinfachten zweidimensionalen Darstellung sind acht Detektoren 13 gezeigt, welche im Bereich der Wände 15 der Messkammer 14 angeordnet sind. Die Detektoren sind durch den Index i von 1 bis 8 nummeriert. Bei den Detektoren 13 handelt es sich um Plastikszintillationszähler, welche zur Erfassung von Gammastrahlung ausgebildet sind. Gegenüber Alpha- und Beta-Strahlung sind die Detektoren abgeschirmt. Die Detektoren weisen ein Detektorvolumen von 2200 cm$^3$ bei einer Detektorfläche von etwa 400 cm$^2$ auf. Der Begriff Detektorfläche bezeichnet dabei die der Strahlenquelle zugewandte Fläche des Detektors 13. Zudem umfasst jeder Detektor 13 einen Photoelektronenvervielfacher, einen Diskriminator, sowie eine Zähleinheit (nicht gezeigt).

Das Messgut 16 befindet sich in der Mitte der Messkammer 14. Innerhalb des Messgutes 16 befindet sich ein Bereich 17 erhöhter Radioaktivität, ein sogenannter Hotspot. Ein vom Hotspot 17 emittiertes Gammateilchen tritt zunächst durch einen Teil des Messgutes 16 hindurch, verlässt dann das Messgut 16 und trifft anschließend auf einen der Detektoren 13, vorliegend auf den Detektor mit dem Index i = 1. Die Trajektorie des Gammateilchens ist durch eine gestrichelte Linie 22 illustriert. Das Gammateilchen wechselwirkt innerhalb des Detektorvolumens mit den Elektronen des Detektormaterials. Durch diese Wechselwirkung werden sogenannte Szintillationsphotonen erzeugt, welche unter Ausnutzung des Photoeffekts vom Photoelektronenvervielfacher in einen elektrischen Puls umgewandelt werden. Der elektrische Puls wird an den Diskriminator weitergeleitet, welcher den elektrischen Puls bei Überschreiten eines gewissen Schwellwertes an die Zähleinheit weiterleitet. Die Zähleinheit erfasst den elektrischen Puls als Zählereignis und bildet so über den Zeitraum der Messung eine Zählrate z2_1.

Da vom Hotspot 17 Gammateilchen statistisch gleichverteilt in alle Richtungen emittiert werden, kann über einen gewissen Messzeitraum für jeden Detektor i eine Zählrate Z_i bestimmt werden. Die Zählraten werden über eine Signalleitungen 18 an ein Anpassungsmodul 19 weitergeleitet.

Die erfindungsgemäße Vorrichtung umfasst außerdem ein Simulationsmodul 20, welches dazu ausgebildet ist, für jeden Detektor i eine Zählrate ZSIM_i,j zu berechnen. Für diese Berechnung wird zunächst angenommen, dass bei einer Koordinate j = 1 des Messgutes ein Punktstrahler des Materials Co-60 (Kobalt-60) mit einer Aktivität A_1 angeordnet ist. Für die Berechnung wird weiterhin eine vorher ermittelte Massendichte sowie ein vorher ermitteltes Material des Messgutes berücksichtigt. Weiterhin wird für jeden Detektor i ein für die Koordinate j = 1 vorgegebener Wirkungsgrad W_i,1 zur Simulation der Zählrate ZSIM_i,1 berücksichtigt. Durch den Wirkungsgrad wird dem Umstand Rechnung getragen, dass nicht jedes Teilchen, welches ausgehend vom Messgut 16 durch das Volumen eines Detektors 13 tritt, einen entsprechenden Zählimpuls auslöst, sondern dass das Auslösen eines Zählimpulses nur mit einer gewissen Wahrscheinlichkeit erfolgt. Der Wirkungsgrad weist vorliegend eine Unsicherheit von weniger als 15% auf.. Mit Hilfe von Wirkungsgraden dieser hohen Genauigkeit können die simulierten Zählraten ZSIM_i,1 für jeden Detektor mit hoher Zuverlässigkeit berechnet werden.

Nachdem eine simulierten Zählraten ZSIM_i,1 für jeden Detektor ermittelt wurde, führt das Anpassungsmodul 19 eine Anpassung der simulierten Zählraten ZSIM_i,1 an die gemessenen Zählraten Z_i durch. Dazu verändert das Anpassungsmodul 19 die in der Simulation angenommene Aktivität A_1 und oder die Koordinate j = 1 des Punktstrahlers. Im vorliegenden Fall zeigt sich, dass mittels der Annahme eines einzelnen Punktstrahlers an der Koordinate j = 1 noch keine hinreichende Übereinstimmung zwischen der gemessenen Zählrate Z_i und der simulierten Zählrate ZSIM_i,1 gefunden werden kann. Daher wird vorliegend angenommen, dass eine Mehrzahl von Punktquellen mit verschiedenen Aktivitäten A_j an verschiedenen Koordinaten j (beispielsweise j = 1 bis 10) des Messgutes angeordnet sind. Die Punktstrahler werden bei der Durchführung der Simulation vorzugsweise sukzessive hinzugefügt und jeweils die Koordinate j des hinzugefügten Punktstrahlers sowie die Aktivitäten A_j des hinzugefügten sowie der bereits vorhandenen Punktstrahler geändert, um die Simulierten Zählraten ZSIM_i,j an die gemessenen Zählraten anzupassen. Wenn mehrere Punktquellen (beispielsweise eine Anzahl von n Punktquellen) in die Simulation einfließen, muss die Summe der simulierten Zählraten mit der tatsächlich vom Detektor erfassten Zählrate übereinstimmen, es muss also für jeden Detektor i gelten:

$$Z_i = \sum_{j=1}^{n} ZSIM_{i,j}.$$

Wenn diese Bedingung mit hinreichender Genauigkeit erfüllt ist, ist das Verfahren abgeschlossen und es kann davon ausgegangen werden, dass sich an den ermittelten Koordinaten j Bereiche erhöhter Aktivität A_j befinden.

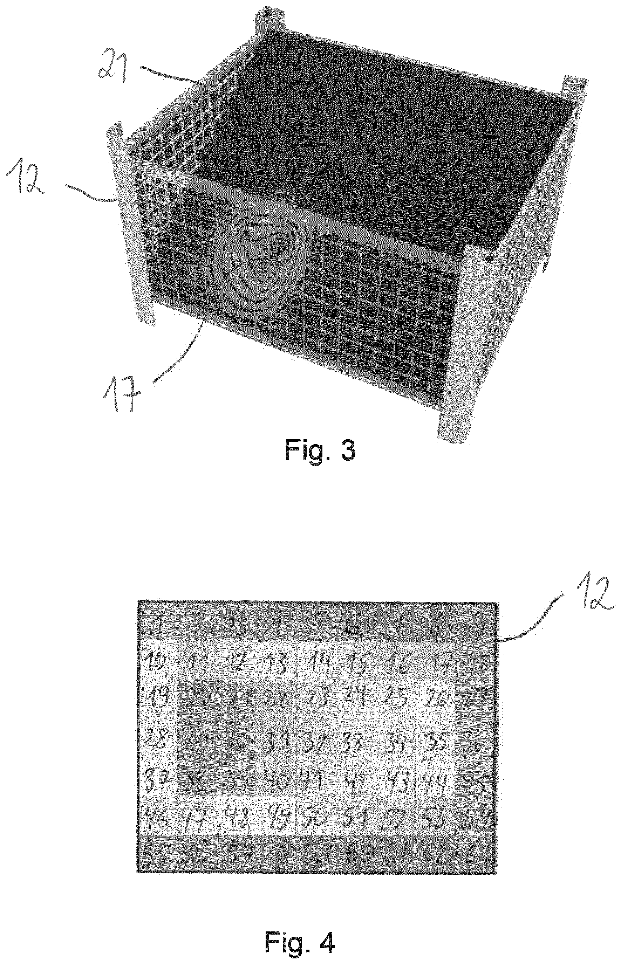

Figur 3 zeigt ein beispielhaftes Ergebnis des erfindungsgemäßen Lokalisierungsverfahrens. Gezeigt ist die oben bereits beschriebene Gitterbox 12, wobei vorliegend nicht das Messgut gezeigt, sondern eine Diagonalebene eingezeichnet ist, auf der die durch das Verfahren ermittelte Aktivität durch eine Mehrzahl von Höhenlinien illustriert ist. Anhand des Höhenlinienverlaufs ist der in Figur 2 bereits eingezeichnete Hotspot 17 erkennbar.

Figur 4 zeigt ein weiteres beispielhaftes Ergebnis des erfindungsgemäßen Lokalisierungsverfahrens, welches an einem anderen Messgut durchgeführt wurde. In dieser Ansicht ist das Ergebnis in einer zweidimensionalen Schnittansicht durch die Gitterbox 12 gezeigt. Das Messgut wurde für die Durchführung des Verfahrens in eine Mehrzahl von Koordinaten eingeteilt. In der in Figur 4 gezeigten Schnittebene sind insgesamt 63 dieser Koordinaten mit entsprechenden Ziffern gekennzeichnet. Die gezeigten Koordinaten j sind entsprechend durch die Zahlen 1 bis 63 bezeichnet. Jeder Koordinate ist ein in der Ebene quadratischer Bereich zugeordnet. Durch das erfindungsgemäße Verfahren wurde jeder der Koordinaten eine Aktivität $A\_j$ mit $j = 1$ bis 63 zugeordnet, wobei die in Figur 4 eingezeichnete Helligkeit ein Maß für die Höhe der Aktivität darstellt. Es zeigt sich, dass am oberen ($j = 1$ bis 9), rechten ($j = 9, 18, 27, 26, 45, 54$ und 63) und unteren ($j = 55$ bis 63) Rand der Gitterbox sowie links von der Mitte ($j = 20, 21, 29, 30, 38$, und 39) Bereiche erhöhter Aktivität vorhanden sind.

**Patentansprüche**

1.　Verfahren zur Lokalisierung von Bereichen (17) erhöhter Radioaktivität innerhalb eines Messgutes (16) unter Verwendung einer Messkammer (14), die von einer Mehrzahl von Detektoren (13) zur Erfassung radioaktiver Strahlung umgeben ist, umfassend die nachfolgenden Schritte:

　　a. Bereitstellen eines Messgutes (16),
　　b. Ermitteln einer mittleren Massendichte des Messgutes (16) sowie eines im Messgut vorhandenen Materials,
　　c. Einbringen des Messgutes (16) in die Messkammer (14),
　　d. Bestimmen einer durch das Messgut (16) verursachten Zählrate $Z\_i$ für jeden Detektor i (13),
　　e. Simulieren einer Zählrate $ZSIM\_{i,j}$ für jeden Detektor i (13) unter der Annahme, dass ein Punktstrahler mit einer Aktivität $A\_j$ an zumindest einer Koordinate j des Messgutes (16) angeordnet ist, sowie unter Berücksichtigung der ermittelten mittleren Massendichte und des Materials des Messgutes (16), wobei ein Füllungsgrad des Messgutes (16) ermittelt und in Schritt e. zur Simulation der Zählrate $ZSIM\_{i,j}$ verwendet wird,
　　f. Anpassen der simulierten Zählraten $ZSIM\_{i,j}$ an die gemessenen Zählraten $Z\_i$ durch Veränderung der angenommenen Aktivität $A\_j$ und/oder der angenommenen Koordinate j,

**gekennzeichnet dadurch, dass** die Anzahl der Detektoren (13) größer als 12 ist und dass bei der Materialermittlung im Schritt b. bis zu einem gewissen Grad von mehr als 85 % bestimmt wird aus welchen Materialien das Messgut besteht.

2.　Verfahren gemäß Anspruch 1, bei dem der Schritt e. für zumindest einen weiteren Punktstrahler wiederholt wird, wobei in Schritt f. die von verschiedenen Punktstrahlern stammenden simulierten Zählraten bei der Anpassung berücksichtigt werden.

3.　Verfahren gemäß Anspruch 1 oder 2, bei dem bei der Simulation gemäß Schritt e. für die Detektoren i (13) und für die Koordinaten j jeweils ein vorgegebener Wirkungsgrad $W\_{i,j}$ verwendet wird.

4.　Verfahren gemäß Anspruch 3, bei dem die vorgegebenen Wirkungsgrade $W\_{i,j}$ eine Unsicherheit von weniger als 15%, vorzugsweise weniger als 10% aufweisen.

5.　Verfahren gemäß einem der Ansprüche 1 bis 4, bei dem die Detektoren (13) Detektorflächen aufweisen, welche die Messkammer im Wesentlichen unterbrechungsfrei umgeben.

6.　Verfahren gemäß einem der Ansprüche 1 bis 5, bei dem die Detektoren (13) als Szintilationszähler und vorzugsweise als Plastikszintilationszähler ausgebildet sind.

7.　Verfahren gemäß einem der Ansprüche 1 bis 6, bei dem die Anzahl der Detektoren (13) größer ist als 16, und weiter vorzugsweise bei größer als 20 liegt.

8.　Verfahren gemäß einem der Ansprüche 1 bis 7, bei dem die Detektoren (13) eine Detektorfläche von mehr als 300 cm$^2$, vorzugsweise mehr als 400 cm$^2$ aufweisen.

9.　Verfahren gemäß einem der Ansprüche 1 bis 8, bei dem Detektoren (13) ein Detektorvolumen von mehr als 1000 cm$^3$, vorzugsweise von mehr als 1500 cm$^3$, weiter vorzugsweise von mehr als 2000 cm$^3$ aufweisen.

10.　Verfahren gemäß einem der Ansprüche 1 bis 9, bei dem der ermittelte Füllungsgrad nicht größer als ein tatsächlicher Füllungsgrad des Messgutes (16) ist.

11.　Verfahren gemäß einem der Ansprüche 1 bis 10, bei dem das Messgut (16) einen Metallanteil aufweist, welcher größer ist als 50%, vorzugsweise größer als 70%, weiter vorzugsweise größer als 90%.

12.　Verfahren gemäß einem der Ansprüche 1 bis 11, bei dem bei der Simulation gemäß Schritt e. angenommen wird, dass der Punktstrahler Cobalt-60 ist.

13.　Verfahren gemäß einem der Ansprüche 1 bis 12, bei dem das Messgut (16) in einem Gebinde, vorzugsweise in einer Gitterbox (12) bereitgestellt wird, wobei in Schritt c. das mit dem Messgut (16) befüllte Gebinde in die Messkammer (14) eingebracht wird.

14. Vorrichtung zur Lokalisierung von Bereichen erhöhter Radioaktivität innerhalb eines Messgutes (16) durch ein Verfahren nach einem der vorhergehenden Ansprüche, umfassend eine Mehrzahl von Detektoren (13) zur Erfassung radioaktiver Strahlung, eine von der Mehrzahl von Detektoren (13) umgebene Messkammer (14), wobei die Anzahl der Detektoren (13) größer als 12 ist, ein Simulationsmodul (20) sowie ein Anpassungsmodul (19), mit folgenden Eigenschaften:

a. die Detektoren i (13) sind jeweils zur Bestimmung einer durch ein in die Messkammer (14) eingebrachtes Messgut (16) verursachten Zählrate $Z_i$ ausgebildet,
b. das Simulationsmodul (20) ist zur Simulation einer jeweils einem Detektor i (13) zugeordneten Zählrate $ZSIM\_i,j$ ausgebildet, wobei zur Simulation angenommen wird, dass ein Punktstrahler mit einer Aktivität $A\_j$ an einer Koordinate j des Messgutes (16) angeordnet ist, und wobei zur Simulation eine vorher ermittelte mittlere Massendichte und ein vorher ermitteltes Material des Messgutes (16) berücksichtigt werden, wobei bei der Materialermittlung bis zu einem gewissen Grad von mehr als 85 % bestimmt wird aus welchen Materialien das Messgut besteht, und wobei ein Füllungsgrad des Messgutes (16) ermittelt und in Schritt e. zur Simulation der Zählrate $ZSIM\_i,j$ verwendet wird,
c. das Anpassungmodul (19) ist zur Anpassung der simulierten Zählraten $ZSIM\_i,j$ an die gemessenen Zählraten $Z\_i$ ausgebildet durch Veränderung der angenommenen Aktivität $A\_j$ und/oder der angenommenen Koordinate j.

**Claims**

1. A method for localizing areas (17) of increased radioactivity within a material to be measured (16) using a measuring chamber (14) surrounded by a plurality of detectors (13) for detecting radioactive radiation, comprising the following steps:

   **a.** Provision of a material to be measured (16),
   **b.** Determining an average mass density of the material to be measured (16) and a material present in the material to be measured,
   **c.** Inserting the material to be measured (16) into the measuring chamber (14),
   **d.** Determining a count rate $Z\_i$ caused by the material to be measured (16) for each detector i (13),
   **e.** Simulating a count rate $ZSIM\_i,j$ for each detector i (13) under the assumption that a point source with an activity $A\_j$ is arranged at at least one coordinate j of the material to be measured (16), and taking into account the determined average mass density and the material of the material to be measured (16), wherein a degree of filling of the material to be measured (16) is determined and used in step **e.** to simulate the count rate $ZSIM\_i,j$,
   f. Adaptation of the simulated count rates $ZSIM\_i,j$ to the measured count rates $Z\_i$ by changing the assumed activity $A\_j$ and/or of the assumed coordinate **j,**

   **characterized in that**
   the number of detectors (13) is greater than 12 and that during the material determination in step b up to a certain degree of more than 85% the material of which the material to be measured consists of is determined.

2. Method according to claim 1, in which step e. is repeated for at least one further point source, wherein in step f. the simulated count rates originating from different point sources are taken into account in the adjustment.

3. Method according to claim 1 or 2, in which in the simulation according to step e. a predetermined efficiency $W\_i,j$ is used for the detectors i (13) and for the coordinates j in each case.

4. Method according to claim 3, wherein the predetermined efficiencies $W\_i,j$ have an uncertainty of less than 15%, preferably less than 10%.

5. Method according to any one of claims 1 to 4, wherein the detectors (13) comprise detector surfaces surrounding the measuring chamber substantially without interruption.

6. Method according to one of claims 1 to 5, in which the detectors (13) are designed as scintillation counters and preferably as plastic scintillation counters.

7. Method according to any one of claims 1 to 6, wherein the number of detectors (13) is greater than 16, and further preferably greater than 20.

8. Method according to any one of claims 1 to 7, wherein the detectors (13) have a detector area of more than 300 cm$^2$, preferably more than 400 cm$^2$.

9. Method according to any one of claims 1 to 8, wherein detectors (13) have a detector volume of more

than 1000 cm$^3$, preferably more than 1500 cm$^3$, more preferably more than 2000 cm$^3$.

10. Method according to any one of claims 1 to 9, wherein the determined degree of filling is not greater than an actual degree of filling of the material to be measured (16).

11. Method according to any one of claims 1 to 10, wherein the material to be measured (16) has a metal content which is greater than 50%, preferably greater than 70%, more preferably greater than 90%.

12. Method according to any one of claims 1 to 11, wherein in the simulation according to step e. it is assumed that the point source is Cobalt-60.

13. Method according to one of claims 1 to 12, in which the material to be measured (16) is provided in a container, preferably in a mesh box (12), wherein in step c. the container filled with the material to be measured (16) is introduced into the measuring chamber (14).

14. Device for localizing areas of increased radioactivity within a material to be measured (16) by a method according to one of the preceding claims, comprising a plurality of detectors (13) for detecting radioactive radiation, a measuring chamber (14) surrounded by the plurality of detectors (13), the number of detectors (13) being greater than 12, a simulation module (20) and an adaptation module (19), having the following properties:

a. the detectors i (13) are each designed to determine a count rate Z_i caused by a material to be measured (16) introduced into the measuring chamber (14),
b. the simulation module (20) is designed to simulate a count rate ZSIM_i,j assigned to a respective detector i (13), it being assumed for the simulation that a point source with an activity A_j is arranged at a coordinate j of the material to be measured (16), and wherein for the simulation a previously determined mean mass density and a previously determined material of the material to be measured (16) are taken into account, wherein in the material determination it is determined to a certain degree of more than 85% which materials the material to be measured consists of, and wherein a filling degree of the material to be measured (16) is determined and in step e. is used to simulate the count rate ZSIM_i,j,
c. the adaptation module (19) is designed to adapt the simulated count rates ZSIM_i,j to the measured count rates Z_i by changing the assumed activity A_j and/or of the assumed coordinate j.

## Revendications

1. Procédé pour localiser des zones (17) de radioactivité accrue à l'intérieur d'un produit à mesurer (16) en utilisant une chambre de mesure (14) qui est entourée d'une pluralité de détecteurs (13) pour détecter un rayonnement radioactif, comprenant les étapes suivantes :

a. Mise à disposition d'un produit à mesurer (16),
b. Détermination d'une densité de masse moyenne du produit à mesurer (16) ainsi que d'un matériau présent dans le produit à mesurer,
c. Introduction du produit à mesurer (16) dans la chambre de mesure (14),
d. Déterminer un taux de comptage Z_i provoqué par le produit à mesurer (16) pour chaque détecteur i (13),
e. Simuler un taux de comptage ZSIM_i,j pour chaque détecteur i (13) en supposant qu'un émetteur ponctuel ayant une activité A_j est disposé à au moins une coordonnée j de l'objet à mesurer (16), et en tenant compte de la densité de masse moyenne déterminée et du matériau du produit à mesurer (16), un degré de remplissage du produit à mesurer (16) étant déterminé et utilisé à l'étape e. pour simuler le taux de comptage ZSIM_i,j,
f. Ajuster les taux de comptage simulés ZSIM_i,j à les taux de comptage mesurés Z_i en modifiant l'activité supposée A_j et/ou la coordonnée supposée j,

**caractérisé en ce que**
le nombre de détecteurs (13) est supérieur à 12 et **en ce que**, lors de la détermination du matériau à l'étape b, on détermine jusqu'à un certain degré de plus de 85% de quel matériau est constitué le produit à mesurer.

2. Procédé selon la revendication 1, dans lequel l'étape e. est répétée pour au moins un autre émetteur ponctuel, dans lequel, à l'étape f., les taux de comptage simulés provenant de différents émetteurs ponctuels sont pris en compte dans l'ajustement.

3. Procédé selon la revendication 1 ou 2, dans lequel, lors de la simulation selon l'étape e., on utilise pour les détecteurs i (13) et pour les coordonnées j respectivement un rendement prédéterminé W_i,j.

4. Procédé selon la revendication 3, dans lequel les rendements prédéterminés W_i,j présentent une incertitude inférieure à 15%, de préférence inférieure à 10%.

**5.** Procédé selon l'une quelconque des revendications 1 à 4, dans lequel les détecteurs (13) comprennent des surfaces de détection qui entourent la chambre de mesure sensiblement sans interruption.

**6.** Procédé selon l'une quelconque des revendications 1 à 5, dans lequel les détecteurs (13) sont des compteurs à scintillation et, de préférence, des compteurs à scintillation plastique.

**7.** Procédé selon l'une quelconque des revendications 1 à 6, dans lequel le nombre de détecteurs (13) est supérieur à 16, et de préférence supérieur à 20.

**8.** Procédé selon l'une quelconque des revendications 1 à 7, dans lequel les détecteurs (13) présentent une surface de détection supérieure à 300 cm$^2$, de préférence supérieure à 400 cm$^2$.

**9.** Procédé selon l'une quelconque des revendications 1 à 8, dans lequel des détecteurs (13) présentent un volume de détection supérieur à 1000 cm$^3$, de préférence supérieur à 1500 cm$^3$, de préférence encore supérieur à 2000 cm$^3$.

**10.** Procédé selon l'une quelconque des revendications 1 à 9, dans lequel le taux de remplissage déterminé n'est pas supérieur à un taux de remplissage réel du produit à mesurer (16).

**11.** Procédé selon l'une des revendications 1 à 10, dans lequel le produit à mesurer (16) présente une teneur en métal qui est supérieure à 50%, de préférence supérieure à 70%, de préférence encore supérieure à 90%.

**12.** Procédé selon l'une quelconque des revendications 1 à 11, dans lequel, lors de la simulation selon l'étape e., on suppose que l'émetteur ponctuel est du cobalt-60.

**13.** Procédé selon l'une des revendications 1 à 12, dans lequel le produit à mesurer (16) est mis à disposition dans un emballage, de préférence dans une caisse à claire-voie (12), l'emballage rempli du produit à mesurer (16) étant introduit dans la chambre de mesure (14) à l'étape c.

**14.** Dispositif pour localiser des zones de radioactivité élevée à l'intérieur d'un produit à mesurer (16) par un procédé selon l'une des revendications précédentes, comprenant une pluralité de détecteurs (13) pour détecter un rayonnement radioactif, une chambre de mesure (14) entourée par la pluralité de détecteurs (13), le nombre de détecteurs (13) étant supérieur à 12, un module de simulation (20) ainsi qu'un module d'adaptation (19), avec les caractéristiques suivantes :

a. les détecteurs i (13) sont chacun conçus pour déterminer un taux de comptage Z_i provoqué par un produit à mesurer (16) introduit dans la chambre de mesure (14),

b. le module de simulation (20) est conçu pour simuler un taux de comptage ZSIM_i,j associé respectivement à un détecteur i (13), en supposant pour la simulation qu'un émetteur ponctuel avec une activité A_j est disposé à une coordonnée j du produit à mesurer (16), et dans lequel, pour la simulation, on tient compte d'une densité de masse moyenne déterminée au préalable et d'un matériau déterminé au préalable du produit à mesurer (16), dans lequel, lors de la détermination du matériau, on détermine jusqu'à un certain degré de plus de 85 % de quels matériaux se compose le produit à mesurer, et dans lequel on détermine un degré de remplissage du produit à mesurer (16) et, à l'étape e. est utilisé pour simuler le taux de comptage ZSIM_i,j,

c. le module d'adaptation (19) est conçu pour adapter les taux de comptage simulés ZSIM_i,j à les taux de comptage mesurés Z_i en modifiant l'activité supposée A_j et/ou de la coordonnée supposée j.

Fig. 1

Fig. 2

21
12
17

Fig. 3

12

| 1 | 2 | 3 | 4 | 5 | 6 | 7 | 8 | 9 |
| 10 | 11 | 12 | 13 | 14 | 15 | 16 | 17 | 18 |
| 19 | 20 | 21 | 22 | 23 | 24 | 25 | 26 | 27 |
| 28 | 29 | 30 | 31 | 32 | 33 | 34 | 35 | 36 |
| 37 | 38 | 39 | 40 | 41 | 42 | 43 | 44 | 45 |
| 46 | 47 | 48 | 49 | 50 | 51 | 52 | 53 | 54 |
| 55 | 56 | 57 | 58 | 59 | 60 | 61 | 62 | 63 |

Fig. 4